# EUROPÄISCHE PATENTANMELDUNG

(11) **EP 3 438 423 A1**
(43) Veröffentlichungstag der Anmeldung: **06.02.2019**
(21) Anmeldenummer: 17184877.3
(22) Anmeldetag: 04.08.2017
(51) Int. Cl.: F01K 3/14, F01K 3/18, F28D 20/00

(54) **ENERGIESPEICHER ZUM SPEICHERN VON ELEKTRISCHER ENERGIE ALS WÄRME UND VERFAHREN HIERZU**

(71) Anmelder: Lumenion GmbH, 10829 Berlin (DE)
(72) Erfinder: ZWINKELS, Andrew, 10827 Berlin (DE)
(74) Vertreter: Ridderbusch, Oliver

(57) **Zusammenfassung**

Ein Energiespeicher zum Speichern von elektrischer Energie in Form von Wärmeenergie umfasst: einen elektrischen Heizer zum Umwandeln von elektrischer Energie in Wärmeenergie; einen Wärmespeicher zum Speichern der Wärmeenergie des elektrischen Heizers; und einen Wärmetauscher zum Ausgeben von Wärmeenergie des Wärmespeichers. Der Wärmespeicher umfasst zumindest: mehrere Metallstangen, welche aufrecht angeordnet sind und dem Speichern von Wärmeenergie des elektrischen Heizers dienen; ein Fundament; und mehrere Stützeinheiten, wobei jede Stützeinheit eine der Metallstangen trägt und mit dem Fundament verbunden ist. Zudem wird ein entsprechendes Verfahren zum Betreiben eines solchen Energiespeichers beschrieben.

## Beschreibung

Die vorliegende Erfindung bezieht sich in einem ersten Aspekt auf einen Energiespeicher zum Speichern von elektrischer Energie in Form von Wärmeenergie nach dem Oberbegriff des Anspruchs 1.

In einem zweiten Gesichtspunkt betrifft die Erfindung ein Verfahren zum Betreiben eines Energiespeichers, in dem elektrische Energie in Form von Wärmeenergie speicherbar ist und Wärmeenergie entnehmbar ist, nach dem Oberbegriff des Anspruchs 15.

Energiespeicher für elektrische Energie sind von immenser wirtschaftlicher Bedeutung. Insbesondere durch die steigende Nutzung von Sonnen- und Windenergie schwanken die erzeugten Mengen elektrischer Energie zeitlich stark. Dadurch entstehen vorrübergehend beträchtliche Überschüsse elektrischer Energie, welche zur Zeit nicht oder nur zu kleinem Teil effizient gespeichert werden können. Elektrochemische Speicher (Batterien) bieten trotz hoher Kosten nur sehr geringe Speichermengen. Größere Energiemengen können in Form von Wärme gespeichert werden. Es wird erwartet, dass derartige Energiespeicher eine entscheidende Rolle bei einer volkswirtschaftlich stärkeren Nutzung regenerativer Energiequellen spielen. So muss eine Speichermenge von Energiespeichern mit dem Anteil wachsen, den Sonnen- und Windenergie an der insgesamt erzeugten elektrischen Energie in einem Staat haben.

Gattungsgemäße Energiespeicher wurden beispielsweise von der Anmelderin in EP 3 139 108 A1 oder in EP 3 139 107 A1 beschrieben. Ein gattungsgemäßer Energiespeicher zum Speichern von elektrischer Energie in Form von Wärmeenergie umfasst:
- einen elektrischen Heizer zum Umwandeln von elektrischer Energie in Wärmeenergie,
- einen Wärmespeicher zum Speichern der Wärmeenergie des elektrischen Heizers und
- einen Wärmetauscher zum Ausgeben von Wärmeenergie des Wärmespeichers.

In entsprechender Weise umfasst ein Verfahren zum Betreiben eines Energiespeichers, in dem elektrische Energie in Form von Wärmeenergie speicherbar ist und Wärmeenergie entnehmbar ist, zumindest die folgenden Schritte:
- Umwandeln von elektrischer Energie in Wärmeenergie mittels eines elektrischen Heizers,
- Speichern von Wärmeenergie des elektrischen Heizers mit einem Wärmespeicher und
- Ausgeben von Wärmeenergie des Wärmespeichers mit einem Wärmetauscher.

Der Wärmespeicher kann ein Metallkörper sein, welcher zum Speichern von Wärmeenergie über einen großen Temperaturbereich erhitzt wird, beispielsweise von Raumtemperatur bis auf eine Temperatur nahe dem Schmelzpunkt des Metallkörpers, zum Beispiel 600°C. Durch diese starken Temperaturänderungen erfährt der Metallkörper beträchtliche thermische Ausdehnungen. Diese können mechanische Belastungen angrenzender Komponenten des Energiespeichers zur Folge haben. Problematisch bei bekannten Energiespeichern ist, wie bei geringen Kosten und einem möglichst einfachen Aufbau Belastungen durch thermische Expansion der Komponenten gering gehalten werden kann.

Als eine **Aufgabe** der Erfindung kann das Bereitstellen eines Energiespeichers angesehen werden, bei welchem thermische Belastungen möglichst gering sind und gleichzeitig ein Aufbau möglichst kostengünstig ist und ein effizientes Speichern und Entnehmen von Energie möglich sind. Außerdem soll ein entsprechendes Verfahren zum Betreiben eines Energiespeichers angegeben werden.

Diese Aufgabe wird durch den Energiespeicher mit den Merkmalen des Anspruchs 1 und durch das Verfahren mit den Merkmalen des Anspruchs 15 gelöst.

Vorteilhafte Varianten des erfindungsgemäßen Energiespeichers und des erfindungsgemäßen Verfahrens sind Gegenstand der abhängigen Ansprüche und werden außerdem in der folgenden Beschreibung erläutert.

Bei dem Energiespeicher der oben genannten Art umfasst erfindungsgemäß der Wärmespeicher zumindest Folgendes:
- mehrere Metallstangen, welche aufrecht angeordnet sind und dem Speichern von Wärmeenergie des elektrischen Heizers dienen,
- ein Fundament,
- mehrere Stützeinheiten, wobei jede Stützeinheit eine der Metallstangen trägt und mit dem Fundament verbunden ist.

Bei dem Verfahren der oben genannten Art umfasst erfindungsgemäß der Wärmespeicher zumindest:
- mehrere Metallstangen, welche aufrecht angeordnet werden und mit denen Wärmeenergie des elektrischen Heizers gespeichert wird,
- ein Fundament,
- mehrere Stützeinheiten, wobei jede Stützeinheit eine der Metallstangen trägt und mit dem Fundament verbunden ist.

Vorteilhafterweise sind durch die erfindungsgemäße Gestaltung die Auswirkungen thermischer Ausdehnungen gering. Beim Stand der Technik wird in der Regel ein großer Körper als Wärmespeicher verwendet, beispielsweise eine Metallplatte. Ausdehnungen in horizontaler Richtung, das heißt quer oder senkrecht zu einer Schwerkraftsrichtung, können bei solchen Platten problematisch sein. Vorteile bietet die erfindungsgemäße Gestaltung, bei welcher ein Wärmespeicher durch mehrere Metallstangen gebildet ist. Die Metallstangen haben eine Längsachse, die aufrecht angeordnet ist, das heißt in vertikaler Richtung oder in Schwerkraftsrichtung. Nach oben hin sind die Metallstangen vorzugsweise frei, also nicht eingespannt oder befestigt, so dass eine thermische Ausdehnung in Schwerkraftsrichtung unproblematisch ist. Eine Ausdehnung in horizontaler Richtung ist gering, da ein Durchmesser der Metallstangen erheblich kleiner ist als ihre Länge in Schwerkraftsrichtung, beispielsweise ist die Länge mindestens 5mal oder mindestens 10mal so groß wie der Durchmesser. Haben die Metallstangen einen eckigen Querschnitt, kann als Durchmesser ihre größte Abmessung innerhalb ihrer Querschnittsebene verstanden werden. Die Metallstangen sind zueinander beabstandet, so dass eine thermische Ausdehnung bei Erhitzen der Metallstangen bloß Freiräume zwischen den Metallstangen verkleinert, aber die Gesamtabmessung in den Querschnittsrichtungen, das heißt der Bereich, der durch die äußersten oder am weitesten voneinander entfernen Metallstangen abgedeckt wird, ist trotz thermischer Ausdehnung im Wesentlichen konstant. Dies ist besonders wichtig für das Fundament, welches die Metallstangen (über die Stützeinheiten) trägt. Das Fundament erfährt keine oder kaum mechanische Belastungen, wenn die Metallstangen thermisch expandieren. Für eine thermische Expansion des Fundaments sind die Stützeinheiten relevant. Durch diese ist das Fundament zumindest teilweise isoliert von den Metallstangen, so dass das Fundament weniger stark und langsamer durch die Metallstangen erhitzt wird, als wenn die Metallstangen direkt mit dem Fundament verbunden wären. Gerade Wärmeausdehnungen des Fundaments sind bei Ausführungen des Stands der Technik besonders problematisch.

Indem Stützeinheiten zwischen Metallstangen und Fundament verwendet werden, ist ein sehr einfacher Aufbau der Stützeinheiten möglich, womit deren Masse und Kosten gering sein können. Zudem können Metallstangen sehr kostengünstig hergestellt werden. Sie werden auch als Knüppel oder Billets bezeichnet. Da sie bis auf den Kontakt zur Stützeinheit frei im Raum stehen, sind größere Toleranzen in der Form und den Abmessungen der Metallstangen möglich. Zudem sind kaum oder keine Frässchritte zum Formen der Metallstangen erforderlich. Bei anderen Formen, insbesondere wenn der Wärmespeicher direkt die elektrische Heizeinheit oder Wärmetauscherrohre kontaktieren soll, sind die Fräs- oder Formungskosten erheblich höher und können die Materialkosten für den Wärmespeicher weit überschreiten.

Die Metallstangen oder -stäbe können zylinderförmig sein mit einer prinzipiell beliebigen Querschnittsform. Beispielsweise kann ihr Querschnitt kreisförmig oder rechteckig sein, was eine einfache Herstellung erlaubt. Die Metallstangen bilden den Teil des Wärmespeichers, welcher dem Speichern von Wärmeenergie dient. Das heißt, von einer im Betrieb des Energiespeichers aufgenommenen Wärmeenergie wird mindestens 60% oder mindestens 80% in den Metallstangen gespeichert, während die übrigen Energieanteile auf beispielsweise die Stützeinheiten oder den Wärmetauscher verteilt sind. Alternativ kann auch die Wärmekapazität der Metallstangen mindestens 60% oder mindestens 80% der Wärmekapazität des gesamten Wärmespeichers betragen.

Um einen Wärmeübertrag von den Metallstangen auf das Fundament gering zu halten, können die Metallstangen beabstandet vom Fundament sein, kontaktieren das Fundament also nicht direkt. Ein Kontakt wird bevorzugt allein über die zugehörigen Stützeinheiten hergestellt. Dabei ist ein Wärmeleitkoeffizient des Materials der Stützeinheiten vorzugsweise kleiner als ein Wärmeleitkoeffizient des Materials der Metallstangen. Beispielsweise kann Edelstahl für Stützeinheiten und ein anderer Stahl, also kein Edelstahl, für die Metallstangen verwendet werden. Jede Metallstange wird vorzugsweise von ihrer eigenen Stützeinheit getragen, womit also jede Stützeinheit genau eine Metallstange trägt. Dabei besteht eine Stützeinheit vorzugsweise aus einem einstückigen Körper, wodurch Wirkungen thermischer Ausdehnungen weniger problematisch sind. Die Stützeinheit besteht demnach aus einem einheitlichen Material, dessen Wärmeleitkoeffizient, wie beschrieben, kleiner sein soll als der Wärmeleitkoeffizient der Metallstange, welche vorzugsweise auch ein einstückiger Körper aus einem einheitlichen Material ist. Es sind alternativ aber auch Stützeinheiten denkbar, die direkt miteinander verbunden sind und so ein Gerüst bilden, dass mehrere Metallstangen trägt. In diesem Fall können mehrere Metallstangen von einer Stützeinheit getragen werden oder mehrere Stützeinheiten dienen dem Halten einer Metallstange.

Das Material der Metallstangen soll eine möglichst große spezifische Wärmekapazität haben, welche vorzugsweise größer ist als die der Stützeinheiten oder des Fundaments.

Indem die Metallstangen durch die Stützeinheiten vom Fundament getrennt sind, ist eine Erwärmung des Fundaments und des direkt an das Fundament angrenzenden Teils der jeweiligen Stützeinheiten reduziert, womit thermische Ausdehnungen am Fundament unproblematisch sein sollten. Zusätzlich können aber auch ein Material der Stützeinheiten und ein Material des Fundaments so gewählt sind, dass ihre Wärmeexpansionskoeffizienten um höchstens 10%, vorzugsweise höchstens 5%, voneinander abweichen. Hingegen ist der exakte Wert des Wärmeexpansionskoeffizienten der Metallstangen weniger relevant, da sich diese weitgehend frei ausdehnen können. Daher können Materialien für die Metallstangen, die Stützeinheiten und das Fundament so gewählt sind, dass Wärmeexpansionskoeffizienten der Materialien der Stützeinheiten und des Fundaments näher beieinander liegen als Wärmeexpansionskoeffizienten der Materialien der Metallstangen und des Fundaments.

Als Wärmeexpansionskoeffizient kann eine Längenänderung bei einer Temperaturerhöhung um 1°C, insbesondere von 20°C auf 21°C, verstanden werden.

Das Fundament kann eine Grundfläche definieren, über welcher die Metallstangen mittels der Stützeinheiten gehalten werden. Die Grundfläche in ihrer Breite und Länge mindestens so groß sein wie die Fläche, die durch die Metallstangen abgedeckt wird. Damit wird ein sicherer Stand gewährleistet. Das Fundament kann aus einem festen Körper bestehen, damit bestimmte Abstände und Anordnungen der Metallstangen zueinander gewährleistet werden, was relevant ist hinsichtlich einer präzisen Anordnung des Wärmetauschers und des elektrischen Heizers relativ zu den Metallstangen. Das Fundament kann insbesondere aus Beton bestehen oder kann Beton umfassen. Die Stützeinheiten sind vorzugsweise im Fundament eingeschlossen, insbesondere also in Beton gehalten, womit eine sichere und kostengünstige Befestigung realisiert wird.

Jede Stützeinheit kann (genau) ein Rohr sein oder ein oder mehrere Rohre umfassen. Das Rohr kann hohl sein, womit die Masse des Rohrs kleiner ist und damit eine geringere Wärmeleitung zum Fundament hin erfolgt. Das Rohr kann aber auch durch eine nicht-hohle Stange gebildet sein. Das Rohr kann zudem einen kleineren Querschnitt haben als die von ihm getragene Metallstange. Auch dadurch wird die Wärmeleitung zum Fundament reduziert.

Ein unteres Ende eines Rohrs ist im oder am Fundament befestigt, vorzugsweise einbetoniert. Ein oberes Ende des Rohrs kann in eine Aufnahmeöffnung ragen, welche jede Metallstange an ihrem unteren Ende aufweisen kann, damit die jeweilige Metallstange vom Rohr (oder allgemeiner: von der in die Aufnahmeöffnung ragende Stützeinrichtung) getragen wird. Ein Querschnitt der Aufnahmeöffnung kann größer sein als ein Querschnitt des oberen Endes des Rohrs, so dass ein Spalt gebildet wird, insbesondere bei Raumtemperatur oder 20°C. Hat die Metallstange einen größeren Wärmeexpansionskoeffizienten als das Rohr, so kann durch den Spalt sichergestellt werden, dass das Rohr bei einer Wärmeexpansion der Metallstange nicht beschädigt wird. Damit dennoch ein Halt gewährleistet ist, ist die Aufnahmeöffnung tief genug, insbesondere mindestens 3mal, vorzugsweise mindestens 4mal, so tief wie der Durchmesser der Aufnahmeöffnung. Wegen der unterschiedlichen Wärmeausdehnungen kann es bevorzugt sein, dass die Metallstange (insbesondere mit ihrer Aufnahmeöffnung) lediglich auf die Stützeinheit gesetzt ist und nicht weiter fixiert wird, insbesondere nicht verschraubt oder verschweißt wird. Alternativ kann auch auf einen Spalt verzichtet werden, womit bei einer Erhitzung der Druck der Metallstange auf das Rohr erhöht wird.

Durch ein Halten der Metallstange über ihre Aufnahmeöffnung und das hineinragende Rohr der Stützeinheit ist es möglich, dass ein Außenumfang jeder Metallstange frei ist und nicht an die Stützeinheiten angrenzt. Vorteilhafterweise kann sich dadurch die Metallstange frei nach außen ausdehnen, ohne dass es zu Spannungen zu beispielsweise der Stützeinheit kommt. Weil der Außenumfang der Metallstange größer ist als der innere Umfang an der Aufnahmeöffnung, sind am Außenumfang thermische Ausdehnungen relevanter und würden stärkere Probleme zu einer am Außenumfang angrenzenden Stützeinheit bedeuten.

Es kann eine Vielzahl von Metallstangen, beispielsweise mindestens 20 oder 30 nebeneinander auf demselben Fundament angeordnet werden. Dabei können die Metallstangen in mehreren Reihen nebeneinander angeordnet und mit ihren Längsachsen parallel zueinander ausgerichtet sein.

Für einen effizienten Wärmetransfer kann es bevorzugt sein, dass die Metallstangen nah nebeneinander stehen. Dadurch trifft ein großer Teil der vom elektrischen Heizer abgestrahlten Wärmestrahlung auch auf eine Metallstange. Außerdem kann bei einer nahen Anordnung leichter ein Wärmetauscherrohr gleichzeitig für mehrere Metallstangen genutzt werden. Gleichwohl ist es bevorzugt, dass ein Abstand zwischen den Metallstangen die thermische Ausdehnung von diesen berücksichtigt. Daher kann vorgesehen sein, dass ein Abstand von benachbarten Metallstangen einer Reihe größer ist als eine Temperaturausdehnung, welche benachbarte Metallstangen in Richtung der Reihe erfahren, wenn sie von 20°C auf eine Temperatur 100°C unterhalb ihrer Schmelztemperatur erhitzt werden, und dass dieser Abstand kleiner ist als das Fünffache der genannten Temperaturausdehnung. Eine Temperatur im Bereich von 100°C unterhalb der Schmelztemperatur der Metallstange oder der Stützeinheit bietet im Betrieb einen genügend großen Sicherheitsabstand, so dass ein Schmelzen verhindert wird. Gleichzeitig wird ein unerwünschter Kontakt zwischen den Metallstangen über einen großen Temperaturbereich ausgeschlossen. Die oben genannte Temperaturausdehnung kann alternativ auch definiert sein für ein Erhitzen von 20°C auf eine obere Grenze eines im Betrieb genutzten Temperaturintervalls des Wärmespeichers.

Der Wärmetauscher kann mehrere Wärmetauscherrohre umfassen, durch welche ein Fluid geleitet oder gepumpt wird. Bei der Fluid kann es sich zum Beispiel um Wasser handeln. Allgemeiner kann als Fluid sowohl eine Flüssigkeit als auch ein Dampf genutzt werden. Die Wärmetauscherrohre können zwischen den Metallstangen verlaufen und beabstandet zu den Metallstangen sein. Somit erfolgt ein Wärmetransfer von den Metallstangen auf die Wärmetauscherrohre und das darin befindliche Fluid durch Wärmestrahlung der Metallstangen. Zudem erfolgt ein gewisser Wärmetransfer durch Gas zwischen den Metallstangen und den Wärmetauscherrohren, das heißt durch eine Konvektionsströmung von erhitztem Gas. Es erfolgt aber kein Wärmetransfer durch Wärmeleitung in einem Festkörper, der die Metallstangen und die Wärmetauscherrohre direkt verbinden würde.

Der elektrische Heizer kann mehrere Heizelemente umfassen, welche zwischen den Metallstangen angeordnet sind und beabstandet zu den Metallstangen sind. Ein Wärmetransfer von den Heizelementen auf die Metallstangen erfolgt in analoger Weise zum oben beschriebenen Wärmetransfer zu den Wärmetauscherrohren.

Die Wärmetauscherrohre und/oder die Heizelemente können bewegbar zu den Metallstangen angeordnet sein, um variable thermische Expansionen hierzwischen zu erlauben. Hierzu sind weder die Wärmetauscherrohre noch die Heizelemente mit den Metallstangen oder mit den Stützeinheiten verbunden oder starr gekoppelt. Die Wärmetauscherrohre und/oder die Heizelemente können prinzipiell mit dem Fundament verbunden sein, weil dieses nur geringfügig thermisch expandiert. Damit Wärmetauscherrohre und/oder die Heizelemente problemlos thermisch expandieren können, sind sie vorzugsweise beweglich gelagert oder aufgehängt, wobei ihre Aufhängung nicht mit den Metallstangen oder den Stützeinheiten verbunden ist. Die Aufhängung kann am dem Fundament befestigt sein oder an einem nicht starr mit dem Fundament verbundenen Träger.

Die Metallstangen können in mehreren Reihen angeordnet sein und können insbesondere ein Schachbrettmuster bilden. Es kann aber bevorzugt sein, dass ein Reihenabstand zwischen benachbarten Reihen an Metallstangen größer ist als ein Abstand benachbarter Metallstangen innerhalb einer Reihe. Hierdurch wird zwischen den Reihen ein Freiraum geschaffen, in dem ein Wärmetauscher oder ein elektrischer Heizer angeordnet sein kann. So können zwischen manchen der Reihen an Metallstangen Wärmetauscherrohre angeordnet sein und zwischen anderen der Reihen an Metallstangen Heizelemente angeordnet sein. Es kann bevorzugt sein, dass in den Freiräumen abwechselnd Wärmetauscherrohre und Heizelemente angeordnet sind, das heißt folgende Reihenfolge: eine Reihe an Metallstangen, Heizelemente, eine Reihe an Metallstangen, Wärmetauscherrohre, eine Reihe an Metallstangen, Heizelemente, und so fort. Die Wärmetauscherrohre können zwischen den Reihen an Metallstangen horizontal verlaufen oder mit einer Steigung kleiner 10%. Damit stehen die Wärmetauscherrohre senkrecht zu den Metallstangen oder in einem Winkel zwischen 80° und 100°. Hierdurch verläuft ein Wärmetauscherrohr an mehreren Metallstangen entlang und entnimmt von all diesen Metallstangen Wärmeenergie.

Es können jeweils mehrere der Wärmetauscherrohre übereinander und beabstandet zueinander in verschiedenen Höhenschichten angeordnet sein. Dadurch nehmen die Wärmetauscherrohre Wärmeenergie auf, welche über die Höhe benachbarter Metallstangen abgegeben wird. Beispielsweise können die Höhenschichten, in denen sich Wärmetauscherrohre befinden, mindestens 70% der Höhe der Metallstangen abdecken. Es kann jeweils eine Pumpe für jede Höhenschicht vorhanden sein oder alternativ können die Wärmetauscherrohre mehrerer Höhenschichten durch einen Strömungsteiler versorgt werden, der mit einer einzigen Pumpe verbunden ist. Für eine gleichmäßige Wärmeentnahme aus den Metallstangen können insbesondere eine oder mehrere Pumpen zum Befördern von Fluid durch die Wärmetauscherrohre vorgesehen und so angeordnet sein, dass Strömungsrichtungen von Fluid in übereinander befindlichen Wärmetauscherrohren zueinander entgegengesetzt sind. Übereinander angeordnete Wärmetauscherrohre können also parallel verlaufen, wobei innerhalb der Wärmetauscherrohre, die übereinander angeordnet sind, die Strömungsrichtung antiparallel ist.

Der Wärmetauscher muss nicht Wärmetauscherrohre umfassen, welche zwischen den Metallstangen verlaufen. Stattdessen kann ein Wärmetransfermittel des Wärmetauschers auch frei zwischen den Metallstangen strömen und diese kontaktieren. So kann der Wärmetauscher einen Ventilator umfassen, über welchen Gas als Wärmetransfermittel an den Metallstangen entlang geströmt wird. Als Ventilator soll jede Einrichtung verstanden werden, mit welcher ein Gas beschleunigt werden kann, beispielsweise ein Kompressor oder ein Lüfter. Es kann ein Gehäuse vorgesehen sein, welches den elektrischen Heizer und den Wärmespeicher umschließt, insbesondere luftdicht. Der Wärmetauscher kann ein Einleitungsrohr in einen unteren Bereich des Gehäuses umfassen, um zu erhitzendes Gas in den unteren Bereich des Gehäuses einzuleiten, insbesondere in einem Bereich unterhalb der Metallstangen. Der Wärmetauscher kann ein Ausleitungsrohr an einem oberen Bereich des Gehäuses umfassen, um erhitztes Gas aus dem oberen Bereich des Gehäuses auszuleiten. Allgemein können der obere und untere Bereich so verstanden werden, dass der obere Bereich oberhalb des unteren Bereichs ist. Ist aber zusätzlich der durch das Einleitungsrohr gebildete Gaseinlass in das Gehäuse unterhalb der Metallstangen, so dass einströmendes Gas zunächst an die Stützeinheiten gelangt, so werden die Stützeinheiten durch die verhältnismäßig kühles Gas gekühlt. Dies ist vorteilhaft, um ein Aufwärmen des Fundaments und die damit einhergehenden Wärmeausdehnungen gering zu halten. Das Ausleitungsrohr und damit ein Gasauslass aus dem Gehäuse können sich vorteilhafterweise oberhalb der Metallstangen befinden. Dies ist für eine gleichmäßige Strömung des Gases durch das Gehäuse vorteilhaft: Oberhalb der Metallstangen bildet das Gehäuse einen Freiraum, der weitgehend frei von Strömungshindernissen ist, so dass hier ein weitgehend einheitlicher Druck herrscht; die Metallstangen sind nah beeinander und bewirken somit ein Strömungshindernis / eine Drosselung und daher einen Druckabfall; die Stützeinheiten sind weiter voneinander beabstandet als die Metallstangen und bilden daher einen unteren Bereich, in dem ein weitgehend gleicher Druck vorherrscht. Wird nun Gas in diesen unteren Bereich eingeleitet, in dem ein in etwa gleichmäßiger Druck herrscht, und erfolgt wegen der Metallstangen ein Druckabfall nach oben zu dem Raum oberhalb der Metallstangen, in dem ein in etwa gleichmäßiger Druck herrscht, so heißt dies, dass Gas etwa gleichmäßig zwischen allen Metallstangen aufsteigt und nicht etwa nur nahe dem Gaseinlass am Gehäuse. Daher ist die Anordnung des Gaseinlasses und Gasauslasses wichtig, um eine gleichmäßige Wärmeabgabe aller Metallstangen auf durchströmendes Gas zu erreichen.

Der Wärmetauscher kann einen geschlossenen Kreislauf bilden, in dem das Gas zirkuliert. Als Gas kann vorzugsweise ein inertes Gas oder Gasgemisch verwendet werden. Hierunter kann insbesondere ein sauerstofffreies Gasgemisch verstanden werden. Dadurch wird die Gefahr von Korrosion der Metallstangen und des elektrischen Heizers gering gehalten.

An dem geschlossenen Kreislauf des Wärmetauschers kann ein zweiter Wärmetauscher vorgesehen sein, über welchen Wärmeenergie auf einen zweiten Fluidkreislauf abgegeben wird. Der Ventilator des Wärmetauschers kann vorzugsweise außerhalb des Gehäuses angeordnet sein, um nicht den hohen Temperaturen innerhalb des Gehäuses ausgesetzt zu sein. Vorzugsweise ist der Ventilator daher zwischen dem zweiten Wärmetauscher und dem Einleitungsrohr angeordnet.

Im Betrieb schwankt die Temperatur des Wärmespeichers stark und kann je nach Ladezustand beispielsweise 20°C oder 600°C betragen. Die Temperatur von Gas als Wärmetransfermittel hängt demgemäß ebenfalls stark vom Ladezustand des Wärmespeichers ab. Ein zu hoher Luft- oder Gasdruck bei hoher Gastemperatur sollte vermieden werden. Hierzu kann der geschlossene Kreislauf des Wärmetauschers ein Expansionsvolumen umfassen, dessen Größe mit zunehmendem Druck steigt. Dies kann beispielsweise durch eine bewegbare Wand erfolgen, die insbesondere unter einer Vorspannung stehen kann (beispielsweise kann eine Feder die bewegbare Wand gegen das eingeschlossene Gas drücken). Mit steigender Gastemperatur wird die bewegbare Wand durch den steigenden Gasdruck verschoben, so dass auch bei erhöhter Gastemperatur der Gasdruck nicht übermäßig hoch wird.

Die Heizelemente zwischen den Reihen an Metallstangen können eine Höhe abdecken, welche mindestens 70% der Höhe der Metallstangen entspricht und eine Länge abdecken, welche sich über eine gesamte Länge der angrenzenden Reihen an Metallstangen erstreckt. Dadurch wird eine möglichst gleichmäßige Erwärmung der Metallstangen erreicht.

Ein Heizelement kann prinzipiell beliebig gestaltet sein, solange es elektrische Energie möglichst vollständig, beispielsweise zu mindestens 80%, in Wärmeenergie umwandelt. Die Heizelemente können insbesondere resistiv arbeiten, das heißt sie werden von elektrischem Strom durchflossen und aufgrund ihres elektrischen Widerstands erhitzen sie sich dabei. Ein Heizelement kann hierzu beispielsweise spiralförmig oder mäanderförmig verlaufende Metallstäbe umfassen, oder eine Metallplatte, in die Aussparungen/Freiräume eingefräst oder in anderer Weise (beispielsweise durch Laser-Schneiden) gebildet sind, wodurch der verbleibende Teil der Metallplatte eine Mäanderform hat, das heißt eine mäanderförmige Bahn oder Serpentinenform bildet. Hierbei wird der elektrische Widerstand des Metalls, beispielsweise Stahl, genutzt, damit das Metall sich erhitzt. Dazu können elektrische Anschlüsse an der mäanderförmigen Bahn gebildet sein, über welche eine elektrische Spannung angelegt werden kann.

Es kann vorgesehen sein, dass zwischen zwei Reihen an Metallstangen des Wärmespeichers können allein ein wie oben beschriebenes Heizelement angeordnet ist.

Ein plattenförmiges Heizelement kann so zwischen Reihen an Metallstangen des Wärmespeichers angeordnet sein, dass die Metallplatten aufrecht stehen, das heißt in Längsrichtung der Metallstangen ist eine lange Seite der Plattenform ausgerichtet und nicht etwa die kürzeste Abmessungsrichtung der Plattenform (welche als Dicke der Metallplatte bezeichnet werden kann). Durch die aufrechte Anordnung gelangt ein Großteil der von der Metallplatte abgestrahlten Wärmeenergie auf die Metallstangen des Wärmespeichers, während nur ein kleinerer, an den schmalen Seitenwänden der Metallplatten abgestrahlter Anteil der Wärmestrahlung in andere Richtungen ausgeht, in denen keine Metallstangen angeordnet sind.

Über die Heizelemente können große Leistungen in den Energiespeicher eingespeist werden, beispielsweise bis zu 8 MW.

Bei der Gestaltung eines Heizelements in einer mäanderförmigen Bahn muss verhindert werden, dass durch Verformungen (beispielsweise aufgrund des Eigengewichts oder durch Temperaturausdehnungen) benachbarte mäanderförmige Bahnabschnitte einander berühren. Hierzu können Haltestangen eingesetzt werden, welche mit den mäanderförmigen Bahnabschnitten verbunden sind und diese definiert zueinander halten. Als ein mäanderförmiger Bahnabschnitt kann eine Bahn (das heißt eine Reihe oder ein Stangenabschnitt) der Mäanderform angesehen werden. Vorzugsweise erstreckt sich jede Bahn in Schwerkraftsrichtung (parallel zu den Metallstangen), so dass die mehreren Bahnabschnitte in horizontaler Richtung zueinander benachbart sind. Dies ist für die Stabilität, Aufhängung und Befestigung der Metallplatte wichtig. Es kann bevorzugt sein, dass in einem oberen und/oder unteren Bereich an verschiedenen, insbesondere allen, mäanderförmigen Bahnabschnitten jeweils ein Halteelement gebildet ist, beispielsweise ein Loch oder ein Vorsprung. Für die Halteelemente im oberen Bereich beziehungsweise im unteren Bereich sind ein oder mehrere Haltestangen vorgesehen, welche an zu den Halteelementen korrespondierenden Positionen Halteformen aufweisen, welche mit den Halteelementen eingreifen. Sind die Halteelemente als Löcher oder Vertiefungen gebildet, so können die Halteformen durch Vorsprünge oder Haken gebildet sein, oder umgekehrt. Hierdurch kann eine Metallplatte gehalten und einen Abstand zwischen den mäanderförmigen Bahnabschnitten gewährleistet werden. Es kann insbesondere eine Haltestange vorgesehen sein, welche mit den Halteelementen im oberen Bereich verbunden ist (diese Haltestange verläuft also horizontal), während eine zweite Haltestange mit den Halteelementen im unteren Bereich verbunden ist und demnach ebenfalls horizontal verläuft.

Die Haltestangen sind zumindest an ihren Oberflächen elektrisch isolierend, um einen ungewollten elektrischen Kontakt innerhalb der Mäanderbahn und auch von der Metallplatte zu einem benachbarten Element (beispielsweise dem Wärmespeicher, zu vermeiden.

Für jedes Heizelement kann jeweils eine Aufhängung vorgesehen sein, welche sich in einer horizontalen Richtung betrachtet an einem zentralen Bereich des jeweiligen Heizelements befindet, wobei äußere Bereiche des Heizelements in dieser horizontalen Richtung frei sind (also sich dort keine Aushängung befindet) um thermische Ausdehnungen der Heizelemente in horizontaler Richtung zu erlauben. Eine untere Seite von jedem Heizelement kann frei in der Luft gehalten sein (also beabstandet zum darunter befindlichen Fundament), um thermische Ausdehnungen der Heizelemente in vertikaler Richtung zu erlauben. Eine Aufhängung kann mit einer oder mehreren mittigen Metallstangen des Wärmespeichers verbunden sein, das heißt, ein Heizelement kann von einer oder mehreren Metallstangen des Wärmespeichers gehalten werden. Als "mittig" soll hier die Mitte einer Reihe an Metallstangen verstanden werden.

Alternativ ist auch möglich, dass die mittige Aufhängung eines Heizelements mit dem Fundament verbunden ist. Hierdurch ist auch eine freie Wärmeexpansion des Heizelements nach oben und in den horizontalen Richtungen möglich. Allerdings könnte hier der Wärmetransfer auf das Fundament höher sein, womit die Wärmeausdehnung des Fundaments problematischer wird. Daher kann es bevorzugt sein, dass die Aufhängung der Heizelemente zu den Metallstangen führt oder zu einem anderen Gestell, welches nicht mit dem Fundament verbunden ist, um einen Wärmetransfer auf das Fundament gering zu halten.

Die Gestaltung des elektrischen Heizers oder seine Aufhängung kann auch als ein eigenständiges Erfindungskonzept aufgefasst werden, das unabhängig von der oben beschriebenen Gestaltung des Wärmespeichers erfolgen kann, also unabhängig von den Metallstangen, Stützeinheiten und dem Fundament.

Formulierungen, wonach der Energiespeicher einen elektrischen Heizer, einen Wärmespeicher und einen Wärmetauscher umfasst, können so verstanden werden, dass mindestens ein elektrischer Heizer, mindestens ein Wärmespeicher und mindestens ein Wärmetauscher vorgesehen sind.

Durch die bestimmungsgemäße Verwendung der Merkmale des Energiespeichers, die als fakultative Eigenschaften beschrieben sind, ergeben sich auch Varianten des erfindungsgemäßen Verfahrens.

Weitere Vorteile und Merkmale der Erfindung werden nachstehend mit Bezug auf die beigefügten schematischen Figuren beschrieben. Hierin zeigen:
- Fig. 1: eine schematische Perspektivdarstellung eines Wärmespeichers eines erfindungsgemäßen Energiespeichers;
- Fig. 2: eine schematische Querschnittansicht eines erfindungsgemäßen Energiespeichers;
- Fig. 3: ein schematischer Längsschnitt eines erfindungsgemäßen Energiespeichers;
- Fig. 4: eine Perspektivansicht von Teilen eines Wärmespeichers eines erfindungsgemäßen Energiespeichers;
- Fig. 5: eine Schnittansicht von Teilen eines Wärmespeichers eines erfindungsgemäßen Energiespeichers;
- Fig. 6: ein weiteres Ausführungsbeispiel eines erfindungsgemäßen Energiespeichers;
- Fig. 7: ein wiederum weiteres Ausführungsbeispiel eines erfindungsgemäßen Energiespeichers;
- Fig. 8: einen horizontalen Schnitt durch den Energiespeicher der Fig. 6 oder Fig. 7;
- Fig. 9: ein Heizelement eines erfindungsgemäßen Energiespeichers;
- Fig. 10: eine elektrische Kontaktierung eines Heizelements eines erfindungsgemäßen Energiespeichers und
- Fig. 11: ein Heizelement eines erfindungsgemäßen Energiespeichers.

Gleiche und gleich wirkende Bestandteile sind in den Figuren in der Regel mit denselben Bezugszeichen gekennzeichnet.

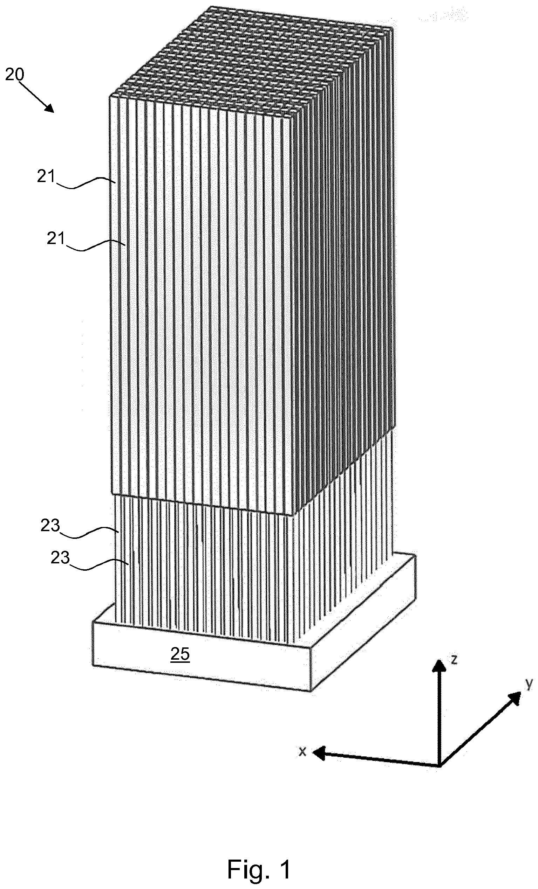

Fig. 1 zeigt eine schematische Perspektivdarstellung eines Wärmespeichers 20 eines Ausführungsbeispiels eines erfindungsgemäßen Energiespeichers.

Der Energiespeicher umfasst außer dem Wärmespeicher 20 einen hier nicht dargestellten elektrischen Heizer, über welchen elektrische Energie von außen in den Energiespeicher eingebracht und gespeichert werden kann. Der elektrische Heizer kann mit einem externen Stromnetz verbunden sein und kann dazu betrieben werden, immer dann elektrische Energie aufzunehmen, wenn vorrübergehend ein Überangebot an elektrischer Energie vorliegt. Die elektrische Energie wandelt der elektrische Heizer in Wärmeenergie um. Diese Wärmeenergie wird auf den nachstehend näher beschriebenen Wärmespeicher 20 übertragen und dort vorrübergehend gespeichert.

Um Wärmeenergie aus dem Energiespeicher abzuführen, umfasst dieser zudem einen in Fig. 1 nicht gezeigten Wärmetauscher. Der Wärmetauscher, beziehungsweise ein im Wärmetauscher geleitetes Fluid, wird vom Wärmespeicher 20 erhitzt. Das erhitzte Fluid wird weggeleitet und kann insbesondere zu Heizzwecken oder zum Erzeugen elektrischer Energie genutzt werden. So kann mit dem erhitzten Fluid, oder mit einem anderen Arbeitsfluid, welches durch das erhitzte Fluid erwärmt wird, eine Motor-Generator-Einheit oder eine Turbinen-Generator-Einheit angetrieben werden, um elektrische Energie zu erzeugen.

Der Wärmespeicher 20 umfasst mehrere Metallstangen 21, welche zum Speichern von Wärmeenergie erhitzt werden. Die Metallstangen 21 sind aufrecht angeordnet, das heißt ihre Längsrichtung ist parallel zur Richtung des Schwerefelds der Erde. Jede Metallstange wird von einer jeweiligen Stützeinheit 23 getragen, wobei die Stützeinheit 23 wiederum an einem gemeinsamen Fundament 25 befestigt ist. Über das gemeinsame Fundament 25 werden somit alle Metallstangen 21 gehalten.

Die Metallstangen 21 werden zur Wärmespeicherung stark erhitzt, beispielsweise über einen Temperaturbereich von mindestens 300°C oder mindestens 500°C. Um möglichst große Energiemengen speichern zu können, kann ein großer Temperaturbereich gewünscht sein. Bei solchen großen Temperaturänderungen sind thermische Ausdehnungen der erhitzten Komponenten wichtig. Weil unterschiedliche Materialien verschiedene thermische Ausdehnungen erfahren, können prinzipiell zwischen diesen Komponenten Spannungen oder Beschädigungen auftreten. Diese Gefahr wird durch die erfindungsgemäße Gestaltung des Wärmespeichers und der Anordnung der übrigen Komponenten des Energiespeichers minimiert.

Hierzu ist die stabförmige Gestaltung der Metallstangen oder Metallstäbe 21 und ihre aufrechte Anordnung wichtig: Die in Absolutwerten stärkste thermische Ausdehnung erfährt die Metallstange 21 in Längsrichtung. Indem die Metallstangen 21 nur an ihren unteren Enden gehalten werden und sie im Übrigen frei sind, kann eine Ausdehnung in Längsrichtung erfolgen, ohne dass es zu Spannungen mit angrenzenden Komponenten käme. Durch die aufrechte Anordnung ist es möglich, eine Metallstange allein an ihrem unteren Ende (oder prinzipiell ihrem oberen Ende) zu halten; im Gegensatz zu beispielsweise einer horizontalen Anordnung ist es nicht erforderlich, an mehreren Stellen oder an beiden Enden der Metallstange eine Stützeinheit vorzusehen. In Querschnittsrichtung ist eine thermische Ausdehnung der Metallstange ebenfalls unproblematisch, insbesondere wenn die Metallstange in dieser Richtung nur von Luft / Gas umgeben ist, wie später näher beschrieben. Aber auch weil der Querschnitt der Metallstangen verhältnismäßig gering ist, ist eine thermische Ausdehnung in Absolutwerten in der Querschnittsebene gering.

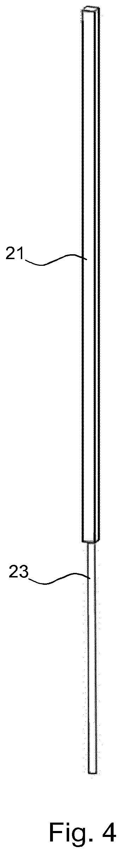

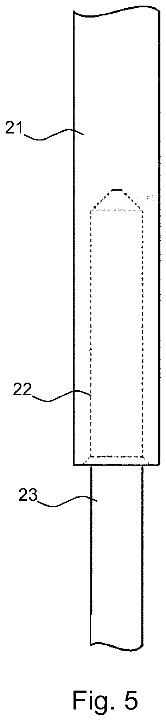

Jede Stützeinheit 23 trägt eine der Metallstangen 21. Eine Kombination aus Metallstange 21 und Stützeinheit 23 ist in einer Perspektivdarstellung in Fig. 4 gezeigt. Zudem zeigt Fig. 5 einen Längsschnitt durch einen Verbindungsbereich zwischen Metallstange 21 und Stützeinheit 23. Wie gezeigt, kann die Stützeinheit 23 durch eine Stange oder ein Rohr 23 gebildet sein. Das Rohr 23 hat einen kleineren Querschnitt als die Metallstange 21. Dies ist für die Befestigung und die Wärmeisolierung nützlich. Durch einen kleineren Querschnitt ist ein Wärmetransfer über das Rohr 23 zum Fundament geringer. Weil das Fundament einstückig oder ohne Freiräume gebildet sein kann, ist es wichtig, dass sich das Fundament weniger stark und schnell erhitzt als die Metallstangen.

Der kleinere Querschnitt des Rohrs 23 kann nützlich sein, wenn die Metallstange 21 eine Aufnahmeöffnung oder -bohrung 22 an ihrem unteren Ende hat, in welche das Rohr 23 hineinragt. In dieser Weise kann die Metallstange 21 auf dem Rohr 23 gehalten werden, ohne dass diese miteinander verschweißt, verschraubt oder starr verbunden wären. Vielmehr sitzt die Metallstange 21 auf dem Rohr 23, wodurch unterschiedliche Wärmeexpansionen unproblematisch sind. Für dieses Aufeinandersitzen ist wiederum eine aufrechte Anordnung der Metallstangen vorteilhaft. Zudem wird durch das Halten in der Aufnahmebohrung 22 erreicht, dass ein Außenumfang der Metallstangen 21 frei sein kann, das heißt die Mantelflächen von jeder Metallstange 21 grenzen nur an Luft an oder insbesondere nicht an eine Stützeinheit. Hierdurch werden mögliche Probleme durch unterschiedliche Wärmeausdehnungen am Außenumfang der Metallstangen 21 vermieden.

Die Aufnahmebohrung 22 kann, wie in Fig. 5 angedeutet, zum Ende der Metallstange 21 hin verbreiteten oder breiter werdenden Einführungsbereich aufweisen. Durch diesen Einführungsbereich können die Metallstange 21 und das Rohr 23 leichter aneinandergesetzt werden. Hinter dem Einführungsbereich entspricht eine Form der Aufnahmebohrung 22 der Form des Rohrs 23, im dargestellten Beispiel also zylindrisch mit einem runden oder prinzipiell auch eckigen Querschnitt. Ein geschlossenes Ende der Aufnahmebohrung 22, welches entfernt vom unteren Ende der Metallstange 21 ist, kann verjüngend zulaufend sein, wie in Fig. 5 gezeigt. Diese Form ist zweckmäßig, wenn ein oberes Ende des Rohrs 23 ebenfalls einen zum Ende kleiner werdenden Querschnitt hat, was für das Einführen des Rohrs 23 in die Aufnahmeöffnung 22 hilfreich ist.

Eine Länge des Rohrs 23 kann zwischen 20% und 50%, vorzugsweise zwischen 25% und 45%, der Länge der Metallstange 21 entsprechen. Eine große Länge des Rohrs 23 ist wünschenswert für einen großen Abstand zum Fundament und damit verbunden eine möglichst gute Wärmeisolierung zum Fundament. Jedoch sinkt die mechanische Stabilität des Rohrs 23 mit zunehmender Rohrlänge, weshalb bei großer Rohrlänge eine Querschnittsgröße des Rohrs 23 größer gewählt werden muss, womit wiederum die Wärmeleitung zum Fundament unerwünschterweise steigt. Daher existiert ein idealer Bereich der Rohrlänge 23, welcher abhängig ist von der zu tragenden Metallstange 21. Bei einer Rohrlänge kleiner als 20% der Metallstangenlänge ist der Abstand zum Fundament so klein, dass eine Wärmeleitung unerwünscht groß wird; bei einer Rohrlänge größer als 50% der Metallstangenlänge wird wiederum die Wärmeleitung wegen eines größeren erforderlichen Rohrdurchmesser unerwünscht hoch.

Insbesondere bei den obigen Betrachtungen kann vorgesehen sein, dass ein Durchmesser der Metallstange zwischen dem 1,5 fachen und 2,5 fachen des Durchmessers des Rohrs beträgt.

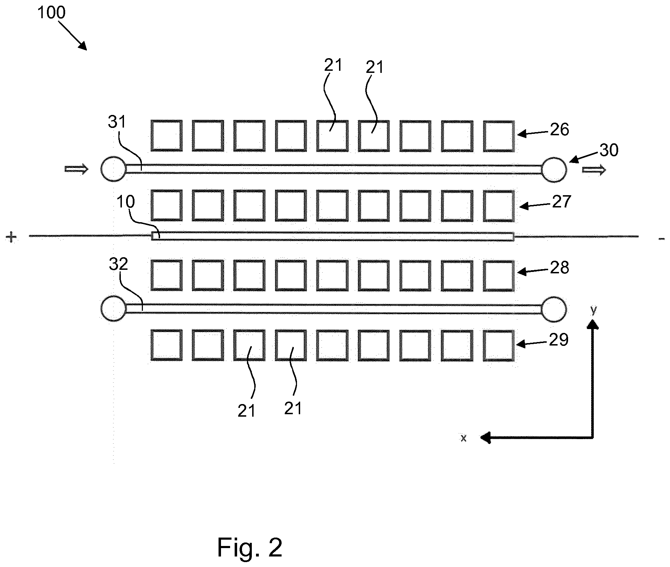

Ein Zusammenwirken des Wärmespeichers 20 mit den übrigen Komponenten des Energiespeichers wird nachstehend mit Bezug auf Fig. 2 beschrieben. Diese zeigt den Energiespeicher 100 in einer Querschnittsansicht (das heißt ein Schnitt senkrecht zur Längsrichtung der Metallstangen des Wärmespeichers). Die Metallstangen 21 haben hier einen rechteckigen, vorzugsweise quadratischen, Querschnitt. Sie sind in mehreren Reihen 26, 27, 28 angeordnet. Ein Abstand zwischen benachbarten Metallstangen 21 innerhalb einer Reihe 26, 27, 28 ist kleiner als ein Abstand zwischen zwei benachbarten Reihen 26, 27 oder 27, 28. Dadurch wird zwischen benachbarten Reihen 26, 27, 28 jeweils ein Freiraum geschaffen. In einem oder mehreren der Freiräume ist jeweils ein Heizelement eines elektrischen Heizers 10 angeordnet. In einem oder mehreren anderen der Freiräume sind zudem Wärmetauscherrohre 31, 32 eines Wärmetauschers 30 angeordnet. Dabei berühren das Heizelement oder die Wärmetauscherrohre 31, 32 nicht die Metallstangen 21.

Das Heizelement des elektrischen Heizers 10 kann sich durchgängig über die gesamte Länge oder über zumindest 80% oder der gesamten Länge der angrenzenden Reihen 27, 28 erstrecken. Das Heizelement wird erhitzt, womit es Wärmestrahlung abgibt. Ein Wärmetransfer vom elektrischen Heizer 10 zu den Metallstangen 21 und von den Metallstangen 21 zu dem Wärmetauscher, beziehungsweise den Wärmetauscherrohren, erfolgt über Wärmestrahlung und über dazwischen befindliches Gas, wobei kein Verbindungskörper zwischen den Heizelementen und den Metallstangen 21 oder zwischen den Metallstangen 21 und dem Wärmetauscher 30, beziehungsweise den Wärmetauscherrohren 31, 32, vorhanden ist, über welchen ein Wärmetransfer erfolgen würde. Vorteilhafterweise können hierdurch die Metallstangen 21, der elektrische Heizer 10 und der Wärmetauscher 30 voneinander unabhängige und verschiedene Wärmeausdehnungen im Betrieb erfahren, ohne dass es zu Spannungen zwischen diesen Komponenten käme.

Ein Abstand zwischen Metallstangen 21 einer Reihe 26 ist kleiner als ein Durchmesser der Metallstangen 21 (beziehungsweise kleiner als eine Abmessung der Metallstange in Richtung der Reihe 26). Durch einen solchen kleinen Abstand wird erreicht, dass vom elektrischen Heizer 10 abgegebene Wärmestrahlung weitgehend vollständig auf die Metallstangen 21 trifft und kaum eine Reihe 27 an Metallstangen 21 passieren kann. Dies ist für einen möglichst effizienten Wärmetransfer wichtig. Außerdem trifft hierdurch Wärmestrahlung, die von Metallstangen einer Reihe 26 abgegeben wird und an Wärmetauscherrohren 31 vorbeigeht, auf die Metallstangen der nächsten Reihe 27, womit die abgestrahlte Wärmeenergie nicht verloren geht, sondern im Wärmespeicher verbleibt.

Das elektrische Heizelement der elektrischen Heizers 10 kann mit einem oder mehreren Metallkörpern gebildet sein, welche von elektrischem Strom durchflossen werden und sich dadurch erhitzen. Zwischen verschiedenen Reihen an Metallstangen kann jeweils ein solches elektrisches Heizelement vorgesehen sein. In der Richtung quer zu den Reihen (das heißt in den Freiräumen zwischen verschiedenen Reihen) können sich elektrische Heizelemente und Wärmetauscherrohre abwechseln, wie in Fig. 2 gezeigt.

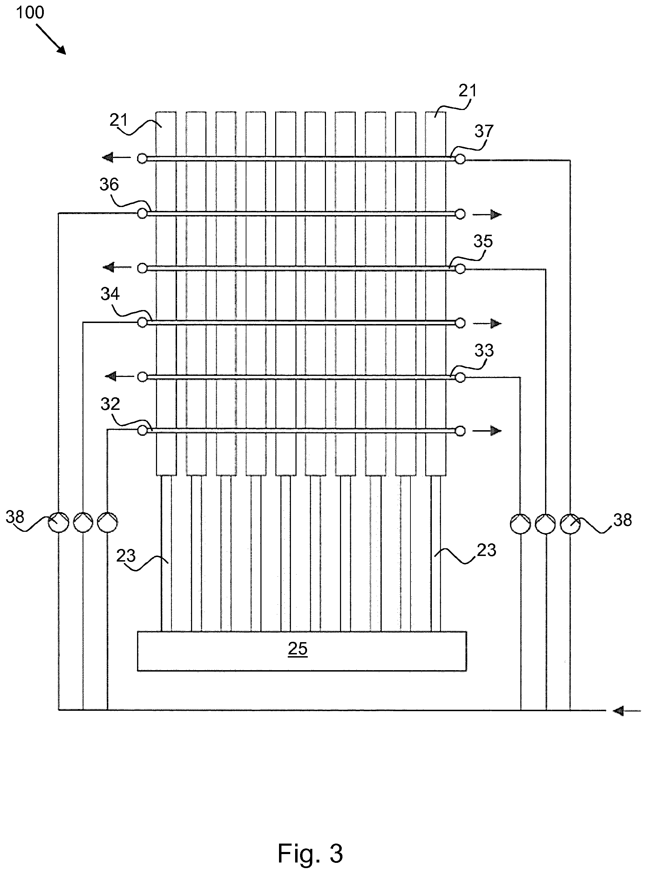

Ein Längsschnitt eines erfindungsgemäßen Energiespeichers 100 ist in Fig. 3 gezeigt. Erkennbar ist, dass das Fundament 25 mindestens so lang ist wie die Reihen an Metallstangen und einstückig gebildet sein kann, beispielsweise als Betonblock. Die Röhren 23 können direkt in den Betonblock oder in Halterungen am Betonblock ragen und so befestigt sein. Das Material der Röhren 23 ist so gewählt, dass dessen Wärmeexpansionskoeffizient höchstens um 5% vom Wärmeexpansionskoeffizienten des Materials des Fundaments abweicht. Es kann vorgesehen sein, dass die Röhren 23 unabhängig voneinander jeweils mit dem Fundament 25 verbunden sind oder dass die Röhren 23 miteinander verbunden sind und sodann gemeinsam mit dem Fundament 25 verbunden sind.

Wie in Fig. 3 gezeigt, verlaufen mehrere Wärmetaucherrohre 32-37 übereinander zwischen denselben zwei Reihen an Metallstangen. Durch eine solche Stapelung von Wärmetaucherrohren kann über die gesamte Höhe der Metallstangen Wärmeenergie auf den Wärmetauscher übertragen werden. Vorzugsweise entspricht ein Abstand vom obersten zum untersten Wärmetauscherrohr 32, 37 mindestens 80% der Höhe/Länge der Metallstangen 21. Dargestellt ist zudem eine Strömungsrichtung von Fluid in den Wärmetauscherrohren. Für übereinander benachbarte Wärmetauscherrohre 32, 33 ist die Strömungsrichtung entgegengesetzt. Dadurch wird eine gleichmäßigere Wärmeentnahme über eine Reihe an Metallstangen erreicht.

Verschiedene Wärmetauscherrohre 37, die auf gleicher Höhe zwischen verschiedenen Reihen an Metallstäben verlaufen, können miteinander verbunden sein und können sich eine Pumpe 38 teilen. Hierdurch wird bei einfachem Aufbau ein gleichmäßiger Fluidstrom und damit eine gleichmäßige Wärmeentnahme erreicht.

Zu einem Wärmetauscherrohr 34, welches höher als ein anderes Wärmetauscherrohr 33 angeordnet ist, muss Fluid weiter nach oben gepumpt werden, womit ohne weitere Maßnahmen eine Strömungsrate in Wärmetauscherrohren umso niedriger ist, je höher sie sich befinden. Dadurch wäre jedoch eine Wärmeentnahme im oberen Bereich der Metallstäbe niedriger. Um dies zu kompensieren, kann es vorgesehen sein, dass Wärmetauscherrohre 37 in einem oberen Bereich mit stärkerem Pumpendruck versorgt werden als Wärmetauscherrohre 32 in einem darunter befindlichen Bereich.

Anstelle mehrerer oder unterschiedlicher Pumpen 38 kann auch eine gemeinsame Pumpe mit Fluidteilern verwendet werden. Unterschiedliche Drücke können dann durch Drosseln in Leitungen zwischen der gemeinsamen Pumpe und den beschriebenen Wärmetauscherrohren vorgegeben werden.

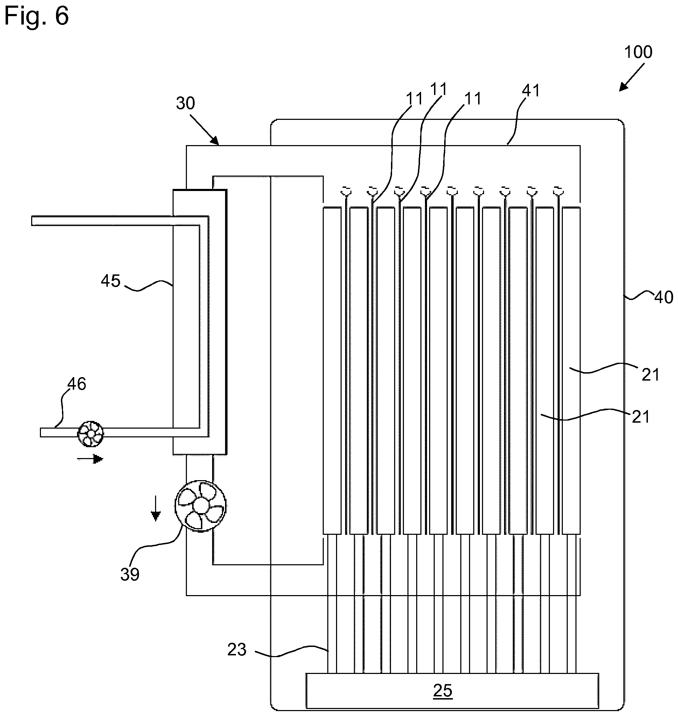

Fig. 6 zeigt ein weiteres Ausführungsbeispiel eines erfindungsgemäßen Energiespeichers. Dieser unterscheidet sich von den vorherigen Beispielen in der Gestaltung des Wärmetauschers 30. Hier umfasst der Wärmetauscher nicht Rohre für ein Wärmetransferfluid, welche zwischen den Metallstangen 21 oder den Heizelementen 11 verlaufen. Stattdessen strömt hier das Wärmetransferfluid frei an den Metallstangen 21 entlang. Die Metallstangen 21 des Wärmespeichers und die Heizelemente 11 sind in einem Gehäuse 40 eingeschlossen, welches wärmeisolierend sein kann und einen (bis auf Einlassöffnungen und Auslassöffnungen luftdichten) Raum für das Wärmetransferfluid schaffen kann. Alternativ oder zusätzlich können auch Gas-/Luftführungswände 41 vorgesehen sein, welche Begrenzungswände für das Wärmetransferfluid bilden. Die Luftführungswände 41 und/oder das Gehäuse 40 schließen außer den Bereich der Metallstangen 21 und Heizelemente 11 auch einen unteren Bereich unterhalb der Metallstangen 21 sowie einen oberen Bereich oberhalb der Metallstangen 21 ein. Der Wärmetauscher 30 umfasst ein Einleitungsrohr, das in den unteren Bereich mündet, und ein Ausleitungsrohr, das mit dem oberen Bereich verbunden ist. Ein Ventilator 39 befördert Gas als Wärmetransferfluid über das Einleitungsrohr in den unteren Bereich, von wo es an den Metallstangen 21 und Heizelementen 11 entlang aufsteigt, dabei erwärmt wird und schließlich über das Ausleitungsrohr austritt. Das Ausleitungsrohr führt zu einem zweiten Wärmetauscher 45, über den Wärme auf einen weiteren Fluidkreislauf 46 abgegeben wird. Von dem zweiten Wärmetauscher 45 gelangt das Gas über den Ventilator 39 wieder zum Einlassrohr. Weil diese Gestaltung des Wärmetauschers 30 auf Wärmetauscherrohre innerhalb des Gehäuses 40 verzichtet, wird das Problem von Wärmeausdehnungen von Wärmetauscherrohren umgangen; zudem wird durch das Einleiten des verhältnismäßig kühlen Gases (das Gas ist kühler als die Metallstangen 21) im unteren Bereich bewirkt, dass die Stützeinheiten 23 und damit das Fundament 25 gekühlt oder weniger stark erhitzt wird. Dies ist hinsichtlich der Wärmeausdehnung des Fundaments 25 von großem Vorteil.

Durch den freien oberen Bereich und den freien unteren Bereich (im Vergleich zu den dicht beieinander angeordneten Metallstangen 21 und Heizelementen 11, welche eine Drosselung entlangströmenden Gases und damit einen Druckabfall bewirken) wird ein gleichmäßiges Verteilen des eingeleiteten Gases im unteren Bereich bewirkt, ehe diese an den Metallstangen 21 entlang aufsteigt. Vorteilhafterweise kann daher ein gleichmäßiges Durchströmen entlang der Metallstangen 21 erreicht werden, ohne dass der Ventilator 39 oder andere Mittel zum Antreiben des Gases innerhalb des Gehäuses 40 angeordnet sein müssten, wo aufgrund der hohen Temperaturen Materialbelastungen hoch wären.

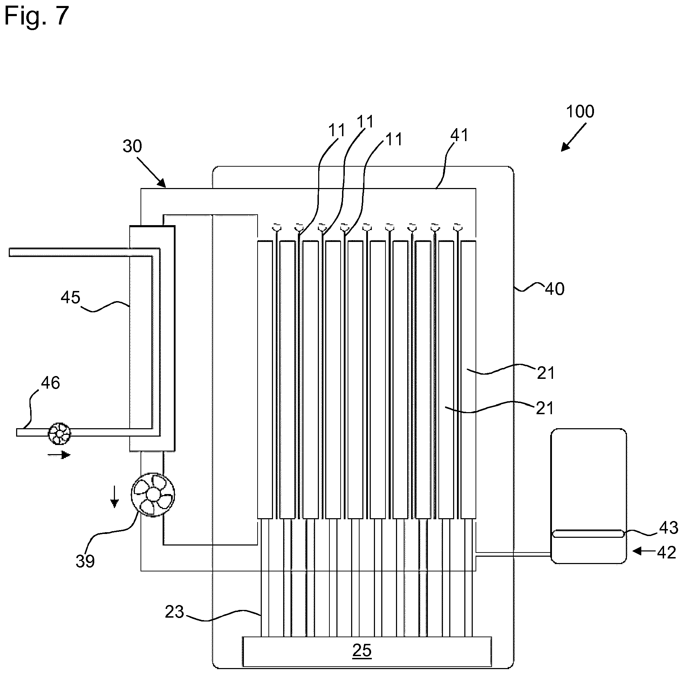

Fig. 7 zeigt ein abgewandeltes Ausführungsbeispiel von Fig. 6. Hier umfasst der geschlossene Kreislauf des Wärmetauschers 30 ein Expansionsvolumen 42, dessen Größe mit zunehmendem Druck der eingeschlossenen Luft steigt. Dazu kann das Expansionsvolumen eine bewegbare Wand 43 umfassen. Vorteilhafterweise wird hierdurch ein Druckanstieg im Wärmetauscher 30, der aus einer Erhitzung der Luft resultiert, zumindest teilweise kompensiert. Das Expansionsvolumen 42 kann einen Behälter mit variablem Volumen umfassen, welcher über eine Leitung mit dem übrigen Wärmetauschervolumen verbunden ist. Die Leitung kann mit dem übrigen Wärmetauschervolumen stromaufwärts von den Metallstangen 21 verbunden sein, so dass nicht die gerade von den Metallstangen 21 erwärmte Luft in das Expansionsvolumen 42 geleitet wird, sondern die gerade am zweiten Wärmetauscher 45 abgekühlte Luft; dadurch bleibt weniger Wärmeenergie am Expansionsvolumen ungenutzt, womit der Gesamtwirkungsgrad steigt. Alternativ kann aber die Leitung auch mit dem oberen Bereich des Gehäuses 40 oder dem Rohr vom oberen Bereich zum zweiten Wärmetauscher 45 verbunden sein. In diesem Fall wird gerade an den Metallstangen 21 erwärmte Luft in das Expansionsvolumen 42 geleitet, womit die erzielte Druckkompensation besonders sensibel auf die Temperatur des Wärmespeichers 20 reagiert.

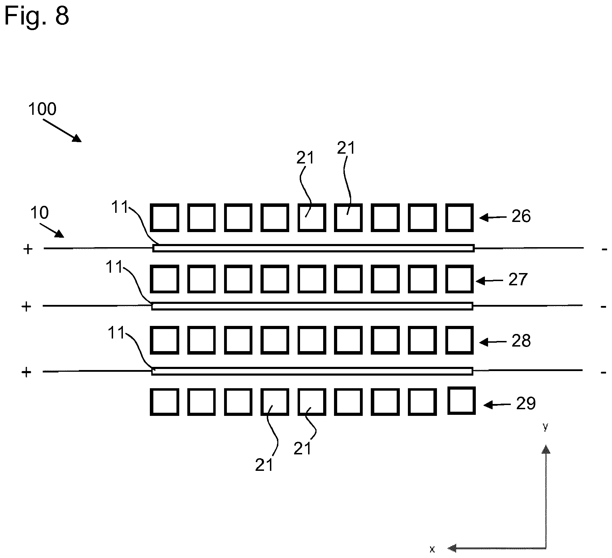

Fig. 8 zeigt einen horizontalen Schnitt durch den Energiespeicher der Fig. 6 oder Fig. 7. Zwischen zwei benachbarten Reihen 26, 27 oder 27, 28 an Metallstangen 21 befindet sich jeweils ein Heizelement 11 des elektrischen Heizers 10. Wärmetauscherrohre sind hier nicht zwischen den Reihen an Metallstangen 21 angeordnet.

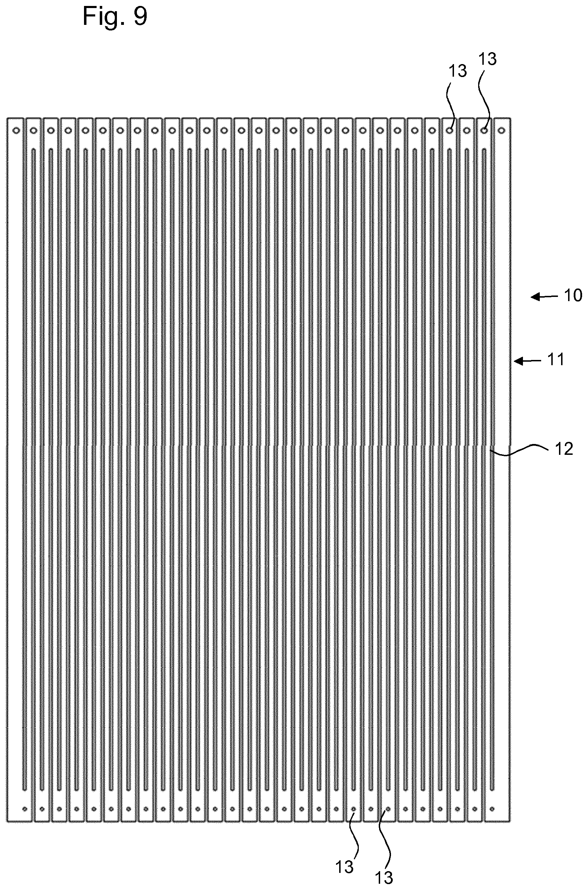

Die Gestaltung eines Heizelements 11, wie es bei allen der genannten Ausführungsbeispielen genutzt werden kann, ist näher in Fig. 9 gezeigt. Das Heizelement 11 umfasst eine Metallplatte, in welche Aussparungen geschnitten sind, so dass die verbleibende Metallplatte eine mäanderförmige Bahn 12 bildet. Die Aussparungen können beispielsweise durch Fräsen oder Laserschneiden gebildet sein und Durchtrennen die Metallplatte so, dass die mäanderförmige Bahn 12 sich in den zwei längeren Dimensionen der Metallplatte erstreckt (und nicht in der kürzeren Dimension, welche die Plattendicke darstellt und in die Zeichenebene von Fig. 9 hinein laufen würde). An verschiedenen Enden oder Abschnitten der mäanderförmigen Bahn 12 sind elektrische Anschlüsse vorhanden (nicht gezeigt), über welche eine Spannung angelegt wird. Ein elektrischer Strom fließt dann entlang der mäanderförmigen Bahn 12 und aufgrund des elektrischen Widerstands des Metalls erhitzt sich die Metallplatte, was auch als resistives oder ohmsches Erhitzen bezeichnet wird.

Wichtig ist die Stabilität der Metallplatte bei thermischen Ausdehnungen, da sich im Betrieb die Metallplatte von Raumtemperatur bis auf über 600°C erhitzen kann. Insbesondere muss vermieden werden, dass Abschnitte der mäanderförmigen Bahn sich verbiegen und einander berühren, was einen Kurzschluss an der Berührungsstelle bedeuten würde, mit der Folge, dass Teile des mäanderförmigen Bahn kaum noch von elektrischem Strom durchflossen würden und sich weniger stark erwärmen würden. Um dies zu vermeiden, werden eine oder mehrere Stützstangen/Haltestangen an der Metallplatte befestigt. Die Metallplatte umfasst Halteelemente 13, welche beispielsweise Löcher oder Vorsprünge an der Metallplatte sein können. Sie können in einer horizontalen Reihe an einem oberen Ende der Metallplatte angeordnet sein. Insbesondere kann an jeder U-förmigen Wende der mäanderförmigen Bahn ein Halteelement 13 vorgesehen sein. Gleichermaßen ist vorzugsweise auch am unteren Bereich der Metallplatte an jeder U-förmigen Wende der mäanderförmigen Bahn jeweils ein Halteelement 13 vorgesehen.

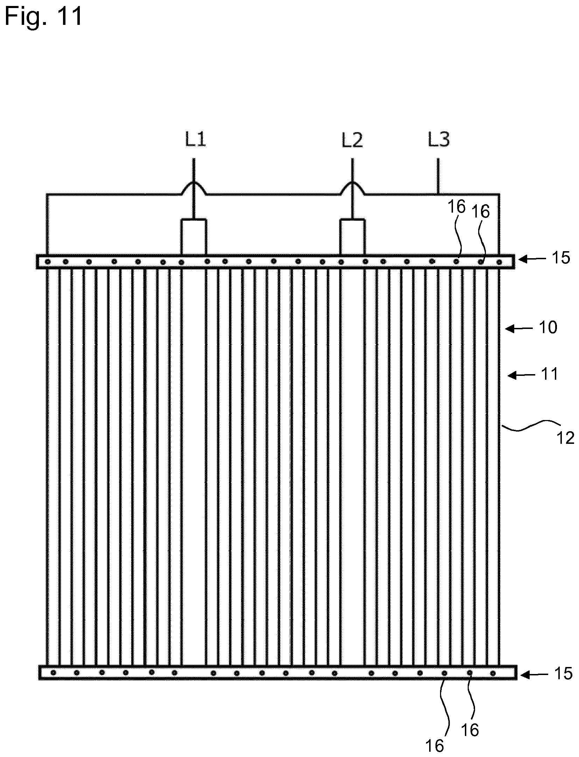

Eine Haltestange 15, die schematisch in Fig. 11 gezeigt ist, kann Halteformen 16 umfassen, welche zu den Halteelementen 13 korrespondierend gewählt sein können, so dass eine Befestigung zwischen den Halteformen 16 und den Halteelementen 13 ermöglicht wird. Eine Haltestange 15 ist mit allen Halteelementen 13 einer Reihe verbunden. Im Beispiel von Fig. 11 wird eine Haltestange 15 für die obere Reihe an Haltelementen 13 eingesetzt und eine weitere Haltestange 15 für die untere Reihe an Halteelementen 13. Hierdurch kann für jede U-förmige Schleife der mäanderförmigen Bahn ein ungewolltes Verbiegen vermieden werden.

Die Haltestangen 15 sind vorzugsweise aus einem Material oder Materialien, deren Wärmeausdehnungskoeffizient höchstens um 10% von dem des Materials der Metallplatte abweicht. Hierdurch werden Materialspannungen aufgrund von Wärmeausdehnungen gering gehalten. Die Haltestangen 15 sind zumindest an ihrer Oberfläche elektrisch isolierend, um keinen zusätzlichen elektrischen Kontakt zwischen Abschnitten der mäanderförmigen Bahn herzustellen.

Die Haltestangen 15 ermöglichen auch eine einfache Aufhängung der Metallplatte: Die Haltestange(n) kann/können vorzugsweise an einem mittleren Bereich (in horizontaler Richtung) aufgehängt sein, so dass sich die horizontalen Enden der Haltestange und der Metallplatte bei Temperaturanstiegen frei ausdehnen können. Die Aufhängung am mittleren Bereich kann insbesondere mit einer oder mehreren mittigen Metallstangen 21 einer Reihe 26 oder 27 oder 28 oder 29, welche zu dem jeweiligen Heizelement 11 benachbart ist, verbunden sein, so dass das Heizelement 11 von benachbarten Metallstangen 21 gehalten wird. Vorzugsweise ist ein Heizelement 11 nur an seinem oberen Bereich aufgehängt, beispielsweise nur an der oberen Haltestange 15, und seine untere Kante hängt frei in der Luft. Dadurch kann auch eine Wärmeausdehnung nach unten und nach oben frei erfolgen.

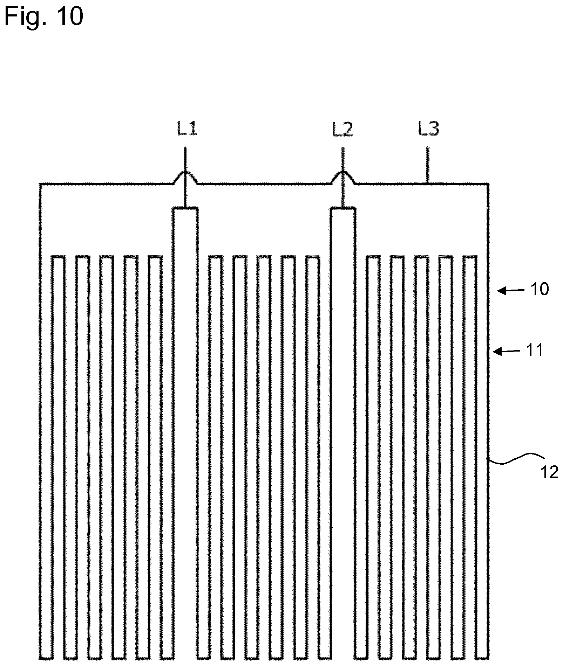

Fig. 10 zeigt schematisch eine elektrische Kontaktierung einer mäanderförmigen Bahn 12. Es können drei elektrische Anschlüsse L1, L2 und L3 vorgesehen sein, welche mit den drei Phasen der üblichen Netzspannung versorgt werden können. Dadurch wird das Stromnetz gleichmäßig belastet.

Durch den erfindungsgemäßen Aufbau eines Energiespeichers kann in kostengünstiger und robuster Weise erreicht werden, dass thermische Expansionen von Komponenten des Energiespeichers unproblematisch sind. Gleichzeitig kann effizient Energie in den Energiespeicher eingebracht, gespeichert und entnommen werden.

## Patentansprüche

1. Energiespeicher zum Speichern von elektrischer Energie in Form von Wärmeenergie, umfassend:
- einen elektrischen Heizer (10) zum Umwandeln von elektrischer Energie in Wärmeenergie,
- einen Wärmespeicher (20) zum Speichern von Wärmeenergie des elektrischen Heizers (10) und
- einen Wärmetauscher (30) zum Ausgeben von Wärmeenergie des Wärmespeichers (20),
**dadurch gekennzeichnet,**
**dass** der Wärmespeicher (20) zumindest Folgendes umfasst:
- mehrere Metallstangen (21), welche aufrecht angeordnet sind und dem Speichern von Wärmeenergie des elektrischen Heizers (10) dienen,
- ein Fundament (25),
- mehrere Stützeinheiten (23), wobei jede Stützeinheit (23) eine der Metallstangen (21) trägt und mit dem Fundament (25) verbunden ist.

2. Energiespeicher nach Anspruch 1,
**dadurch gekennzeichnet,**
**dass** die Metallstangen (21) beabstandet vom Fundament (25) sind und
**dass** ein Wärmeleitkoeffizient des Materials der Stützeinheiten (23) kleiner ist als ein Wärmeleitkoeffizient des Materials der Metallstangen (21).

3. Energiespeicher nach Anspruch 1 oder 2,
**dadurch gekennzeichnet,**
**dass** das Fundament (25) ein Betonblock ist, der eine Grundfläche definiert, über welcher die Metallstangen (21) mittels der Stützeinheiten (23) gehalten werden.

4. Energiespeicher nach einem der Ansprüche 1 bis 3,
**dadurch gekennzeichnet,**
**dass** jede Stützeinheit (23) ein Rohr ist oder umfasst,
**dass** diese Rohre kleinere Querschnitte haben als die getragenen Metallstangen (21).

5. Energiespeicher nach Anspruch 4,
**dadurch gekennzeichnet,**
**dass** jede Metallstange (21) an ihrem unteren Ende eine Aufnahmeöffnung (22) hat, in welche die Stützeinheit (23) hineinragt, um die jeweilige Metallstange (21) zu tragen, und
**dass** ein Außenumfang jeder Metallstange (21) frei ist und nicht an die Stützeinheiten (23) angrenzt.

6. Energiespeicher nach einem der Ansprüche 1 bis 5,
**dadurch gekennzeichnet,**
**dass** die Metallstangen (21) in mehreren Reihen (26, 27, 28) nebeneinander angeordnet und mit ihren Längsachsen parallel zueinander ausgerichtet sind.

7. Energiespeicher nach Anspruch 6,
**dadurch gekennzeichnet,**
**dass** ein Abstand von benachbarten Metallstangen (21) einer Reihe (26) größer ist als eine Temperaturausdehnung, welche benachbarte Metallstangen (21) in Richtung der Reihe (26) erfahren, wenn sie von 20°C auf eine Temperatur 100°C unterhalb ihrer Schmelztemperatur erhitzt werden, und dass dieser Abstand kleiner ist als das Fünffache der genannten Temperaturausdehnung.

8. Energiespeicher nach einem der Ansprüche 1 bis 7,
**dadurch gekennzeichnet,**
**dass** der Wärmetauscher (30) einen Ventilator (39) umfasst, über welchen Gas als Wärmetransfermittel an den Metallstangen (21) entlang geströmt wird, dass ein Gehäuse (40) vorgesehen ist, welches den elektrischen Heizer (10) und den Wärmespeicher (20) umschließt,
**dass** der Wärmetauscher (30) ein Einleitungsrohr in einen unteren Bereich des Gehäuses (40) umfasst, um zu erhitzendes Gas in den unteren Bereich des Gehäuses (40) einzuleiten, insbesondere in einen Bereich unterhalb der Metallstangen (21), und dass der Wärmetauscher (30) ein Ausleitungsrohr an einem oberen Bereich des Gehäuses (40) umfasst, um erhitztes Gas aus dem oberen Bereich des Gehäuses (40) auszuleiten,
**dass** der Wärmetauscher (30) einen geschlossenen Kreislauf bildet und als Gas in dem geschlossenen Kreislauf ein inertes Gas oder Gasgemisch enthalten ist,
**dass** an dem geschlossenen Kreislauf ein zweiter Wärmetauscher (45) vorgesehen ist, an welchem Wärmeenergie auf einen zweiten Fluidkreislauf abgegeben wird, und dass der Ventilator (39) des Wärmetauschers (30) außerhalb des Gehäuses (40) angeordnet ist, insbesondere zwischen dem zweiten Wärmetauscher (45) und dem Einleitungsrohr,
**dass** der geschlossene Kreislauf des Wärmetauschers (30) ein Expansionsvolumen umfasst, dessen Größe mit zunehmendem Druck steigt.

9. Energiespeicher nach einem der Ansprüche 1 bis 8,
**dadurch gekennzeichnet,**
- **dass** der Wärmetauscher (30) mehrere Wärmetauscherrohre (31-37) umfasst, welche zwischen den Metallstangen (21) verlaufen und beabstandet zu den Metallstangen (21) sind, um variable thermische Expansionen hierzwischen zu erlauben,
und/oder
- **dass** der elektrische Heizer (10) mehrere Heizelemente (11) umfasst, welche zwischen den Metallstangen (21) angeordnet sind und beabstandet zu den Metallstangen (21) sind, um variable thermische Expansionen hierzwischen zu erlauben.

10. Energiespeicher nach Anspruch 9,
**dadurch gekennzeichnet,**
**dass** für jedes Heizelement (11) jeweils eine Aufhängung vorgesehen ist, welche sich in einer horizontalen Richtung betrachtet an einem zentralen Bereich des jeweiligen Heizelements (11) befindet, um thermische Ausdehnungen der Heizelemente (11) in horizontaler Richtung zu erlauben,
**dass** eine untere Seite von jedem Heizelement (11) frei in der Luft gehalten ist, um thermische Ausdehnungen der Heizelemente (11) in vertikaler Richtung zu erlauben.

11. Energiespeicher nach einem der Ansprüche 1 bis 10,
**dadurch gekennzeichnet,**
**dass** ein Wärmetransfer von den Heizelementen (11) zu den Metallstangen (21) des Wärmespeichers (20) über Wärmestrahlung erfolgt und über dazwischen befindliches Gas, wobei kein Verbindungskörper zwischen den Heizelementen (11) und den Metallstangen (21) vorhanden ist, über welchen ein Wärmetransfer erfolgen würde.

12. Energiespeicher nach einem der Ansprüche 9 bis 11,
**dadurch gekennzeichnet,**
**dass** ein Reihenabstand zwischen benachbarten Reihen (26, 27) an Metallstangen (21) größer ist als ein Abstand benachbarter Metallstangen (21) innerhalb einer Reihe (26),
**dass** zwischen manchen benachbarten Reihen (26, 27; 28, 29) an Metallstangen (21) die Wärmetauscherrohre (31; 32-37) angeordnet sind und zwischen anderen benachbarten Reihen (27, 28) an Metallstangen (21) die Heizelemente (11) angeordnet sind,
**dass** die Wärmetauscherrohre zwischen den Reihen an Metallstangen (21) horizontal verlaufen oder mit einer Steigung kleiner 10%.

13. Energiespeicher nach einem der Ansprüche 9 bis 12,
**dadurch gekennzeichnet,**
**dass** jeweils mehrere der Wärmetauscherrohre (32-37) übereinander und beabstandet zueinander in verschiedenen Höhenschichten angeordnet sind zum Aufnehmen von Wärmeenergie, welche über die Höhe der Metallstangen (21) abgegeben wird,
**dass** eine oder mehrere Pumpen (38) zum Befördern von Fluid durch die Wärmetauscherrohre (31-37) vorgesehen und so angeordnet sind, dass Strömungsrichtungen von Fluid in benachbart übereinander befindlichen Wärmetauscherrohren (32, 33) zueinander entgegengesetzt sind.

14. Energiespeicher nach einem der Ansprüche 1 bis 13,
**dadurch gekennzeichnet,**
**dass** jedes Heizelement (11) eine Metallplatte umfasst, in welcher Freiräume so gebildet sind, dass die Metallplatte eine mäanderförmige Bahn (12) bildet, entlang welcher über elektrische Anschlüsse eine elektrische Spannung anlegbar ist,
**dass** in einem oberen und/oder unteren Bereich an verschiedenen, insbesondere allen, mäanderförmigen Bahnabschnitten jeweils ein Halteelement (13) gebildet ist, und dass ein oder mehrere Haltestangen (15) vorgesehen sind, welche an zu den Halteelementen (13) korrespondierenden Positionen Halteformen (16) aufweisen, welche mit den Halteelementen (13) eingreifen und so die Metallplatte halten und einen Abstand zwischen den mäanderförmigen Bahnabschnitten gewährleisten, wobei die Haltestangen (15) zumindest an ihren Oberflächen elektrisch isolierend sind,
und
**dass** jede Metallplatte zwischen Reihen an Metallstangen (21) eine Höhe abdeckt, welche mindestens 70% der Höhe der Metallstangen (21) entspricht und eine Länge abdeckt, welche sich über eine gesamte Reihenlänge der angrenzenden Reihen an Metallstangen (21) erstreckt.

15. Verfahren zum Betreiben eines Energiespeichers, in dem elektrische Energie in Form von Wärmeenergie speicherbar ist und Wärmeenergie entnehmbar ist, umfassend:
- Umwandeln von elektrischer Energie in Wärmeenergie mittels eines elektrischen Heizers (10),
- Speichern von Wärmeenergie des elektrischen Heizers (10) mit einem Wärmespeicher (20) und
- Ausgeben von Wärmeenergie des Wärmespeichers (20) mit einem Wärmetauscher (30),
**dadurch gekennzeichnet,**
**dass** der Wärmespeicher (20) zumindest Folgendes umfasst:
- mehrere Metallstangen (21), welche aufrecht angeordnet werden und mit denen Wärmeenergie des elektrischen Heizers (10) gespeichert wird,
- ein Fundament (25),
- mehrere Stützeinheiten (23), wobei jede Stützeinheit (23) eine der Metallstangen (21) trägt und mit dem Fundament (25) verbunden ist.
